# EUROPEAN PATENT APPLICATION

(11) **EP 4 701 290 A2**
(43) Date of publication of application: **25.02.2026**
(21) Application number: 25213121.4
(22) Date of filing: 21.12.2022
(51) Int. Cl.: H04W 60/00

(54) **METHODS FOR UPDATING SYSTEM INFORMATION IN NON-TERRESTRIAL NETWORKS**

(30) Priority: 21.12.2021 US 202163292154 P
(62) Divisional of application: 22850893.3
(71) Applicant: InterDigital Patent Holdings, Inc., Wilmington, DE 19809 (US)
(72) Inventor: MARTIN, Brian, Farnham, GU9 9AN (GB); TEYEB, Oumer, Montreal, H3A 3G4 (CA); KUBOTA, Keiichi, Tokyo, 158-0094 (JP); WATTS, Dylan, Montreal, H3A 3G4 (CA)
(74) Representative: AWA Sweden AB

(57) **Abstract**

Methods, systems, and apparatuses for use in wireless communication are disclosed. A method performed by a wireless transmit/receive (WTRU) unit may compromise: receiving information indicating a first tracking area code (TAC) and first TAC validity time information; registering with a network using the first TAC; receiving information indicating a second TAC and second TAC validity time information; determining, based on the first TAC validity time information and the second TAC validity time information, a time period wherein both the first TAC and second TAC are valid; selecting a time within the time period; and transmitting, at the selected time, a connection request.

## Description

### CROSS-REFERENCE TO RELATED APPLICATIONS

This application claims the benefit of U.S. Provisional Application No. 63/292,154, filed December 21, 2021, the contents of which are incorporated herein by reference.

### BACKGROUND

Non-terrestrial networks (NTN) facilitate deployment of wireless networks in areas where land-based antennas are impractical, for example due to geography or cost. It is envisioned that, coupled with terrestrial networks, NTN will enable truly ubiquitous coverage of 5G networks. NTN deployments support basic talk and text anywhere in the world; however, it is expected that further releases coupled with proliferation of next-generation low-orbit satellites will enable enhanced services such as web browsing.

A NTN consists of an aerial or space-borne platform which, via a gateway, transports signals from a land-based based gNB to a WTRU and vice-versa. New Radio (NR) NTN supports power class 3 WTRU with omnidirectional antenna and linear polarization, or a very small aperture antenna (VSAT) terminal with directive antenna and circular polarization. Support for LTE-based narrow-band IoT (NB-loT) and enhanced machine type communication (eMTC) type devices are also expected to be standardized. Regardless of device type, it is assumed NTN wireless/transmit receive units (WTRUs) are global navigation satellite systems (GNSS) capable.

Aerial or space-borne platforms are classified in terms of orbit, with standardization focusing on low-earth orbit (LEO) satellites with altitude range of 300-1500 km and geostationary earth orbit (GEO) satellites with altitude at 35,786 km. Other platform classifications such as medium-earth orbit (MEO) satellites with altitude range 7000-25000 km and high-altitude platform stations (HAPS) with altitude of 8-50 km are assumed to be implicitly supported. Satellite platforms are further classified as having a "transparent" or "regenerative" payload. Transparent satellite payloads implement frequency conversion and RF amplification in both uplink and downlink, with multiple transparent satellites possibly connected to one land-based gNB. Regenerative satellite payloads can implement either a full gNB or gNB DU onboard the satellite. Regenerative payloads may perform digital processing on the signal including demodulation, decoding, re-encoding, re-modulation and/or filtering.

### SUMMARY

Methods, systems, and apparatuses for use in wireless communication are disclosed. A method performed by a wireless transmit/receive unit (WTRU) may compromise: receiving information indicating a first tracking area code (TAC) and first TAC validity time information; registering with a network using the first TAC; receiving information indicating a second TAC and second TAC validity time information; determining, based on the first TAC validity time information and the second TAC validity time information, a time period wherein both the first TAC and second TAC are valid; selecting a time within the time period; and transmitting, at the selected time, a connection request.

The selecting the time within the time period may be randomized. The randomization may be based on a WTRU-ID and/or a hash function. The time period may be scaled. The scaling may be based on a velocity and/or mobile status of the WTRU. The information indicating the first TAC and the first TAC validity time information may be received from a moving network node. The information indicating the second TAC and the second TAC validity time information may be received from a moving network node. The moving network mode may be part of a non-terrestrial network, such as a satellite. An expiration time associated with the first TAC validity time information may be adjusted if the WTRU moves more than a threshold distance.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating an example of various interfaces within a non-terrestrial network (NTN);
FIG. 3 is a diagram illustrating a WTRU within a NTN with continuous coverage according to an embodiment;
FIG. 4a is a diagram illustrating a WTRU at T1 according to an embodiment;
FIG. 4b is a diagram illustrating a WTRU at T2 according to an embodiment;
FIG. 4c is a diagram illustrating a WTRU at T3 according to an embodiment;
FIG. 5 is a diagram illustrating a WTRU specific tracking area code (TAC) validity time according to an embodiment; and
FIG. 6 is a flowchart illustrating an example procedure performed by a WTRU according to an embodiment.

### DETAILED DESCRIPTION

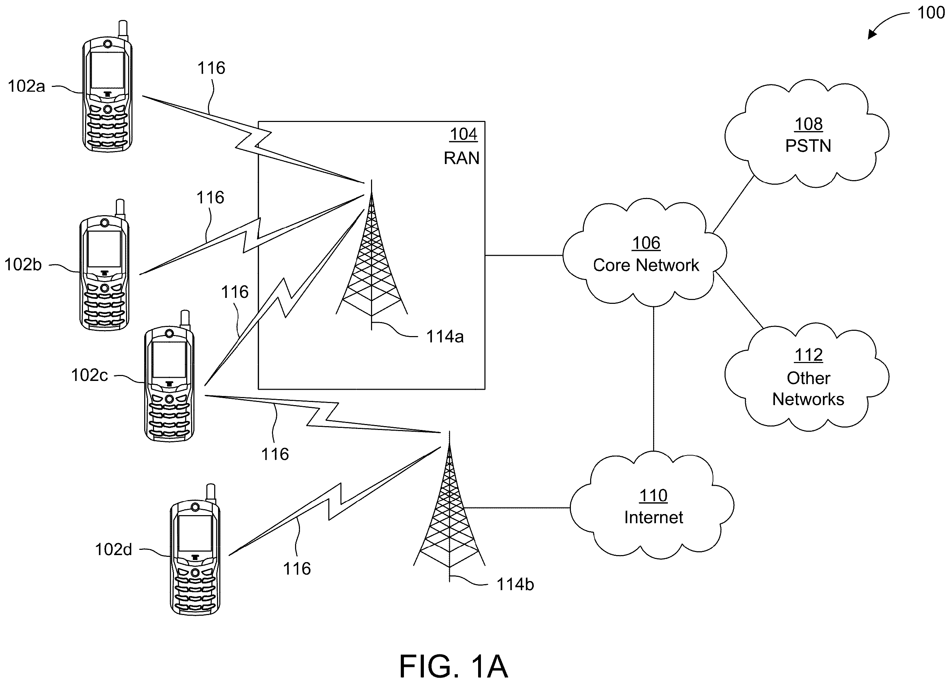

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

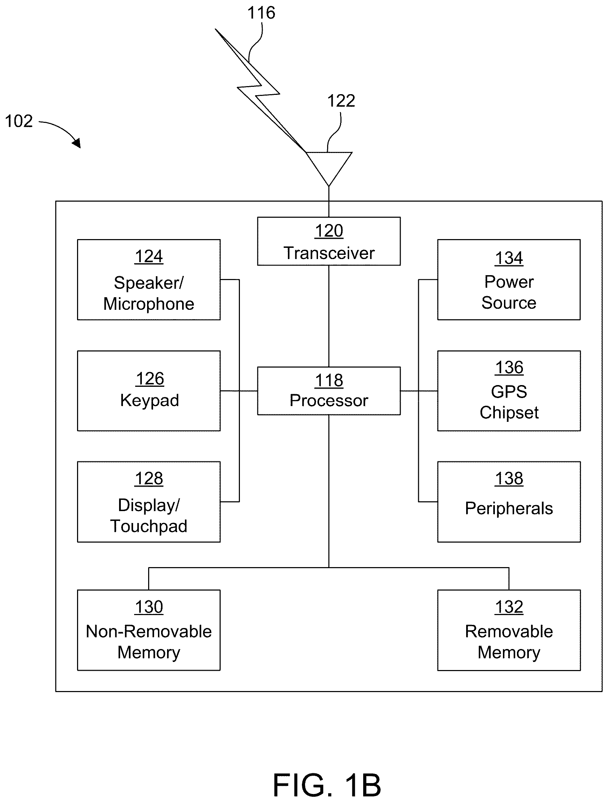

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

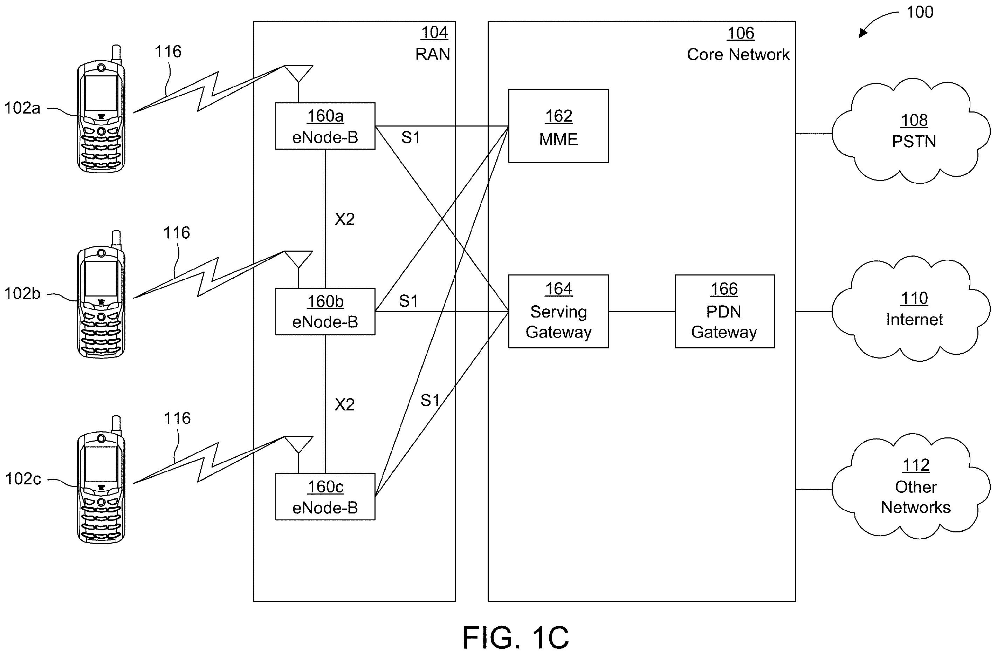

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

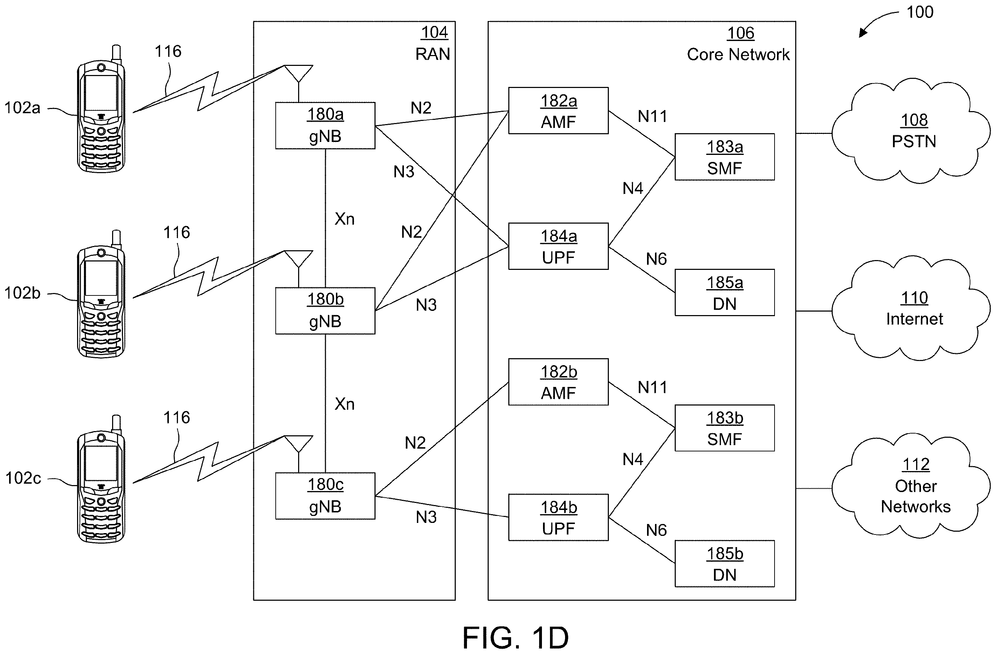

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Abbreviations and acronyms as used herein are provided as follows:
- ACK: Acknowledgement
- BAP: Backhaul Adaptation Protocol
- BH: Backhaul
- CP: Control Plane
- CU: Centralized Unit
- DDDS: Data Delivery Status
- DL: Downlink
- DRB: Data Radio Bearer
- DU: Distributed Unit
- E2E: End to End
- GBR: Guaranteed Bit Rate
- GEO: Geostationary Earth Orbit
- GNSS: Global Navigation Satellite System
- GW: Gateway
- HAPS: High Altitude Platform Station
- IAB: Integrated Access and Backhaul
- ISL: Inter-Satellite Link(s)
- LEO: Low Earth Orbit
- MEO: Medium Earth Orbit
- MIB: Master Information Block
- MR-DC: Multi-RAT Dual Connectivity
- MT: Mobile Termination
- NTN: Non-Terrestriel Network
- PDCP: Packet Data Convergence Protocol
- PDU: Protocol Data Unit
- PEI: Paging early indication
- QoS: Quality of Service
- RAT: Radio Access Technology
- RLF: Radio Link Failure
- RLM: Radio Link Monitoring
- RLC: Radio Link Control
- RNA: RAN Notification Area
- RNAU: RAN Notification Area Update
- RSRP: Reference Signal Received Power
- RTT: Round Trip Time
- SFN: System Frame Numbers
- SIB: System Information Block
- SN: Sequence Number
- SRI: Satellite Radio Interface
- TAC: Tracking Area Code
- TAU: Tracking Area Update
- TCP: Transmission Control Protocol
- UAS: Unmanned Aircraft System
- UL: Uplink
- UP: User Plane
- VoIP: Voice over IP

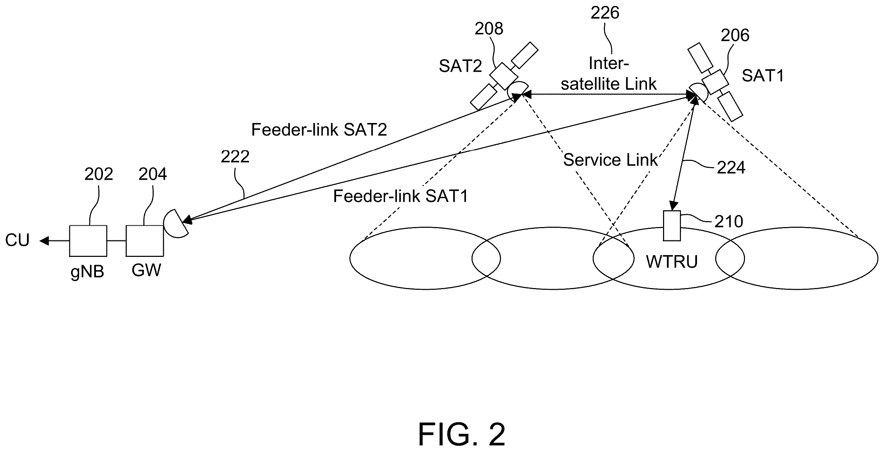

FIG. 2 is an exemplary diagram illustrating different interfaces in a Non-Terrestrial Network (NTN). As shown in FIG. 2, an NTN may include a gNB 202, GW 204, SAT1 206, SAT2 208, and WTRU 210. The following radio interfaces may be defined in an NTN: (1) feeder-link (2) service link; and (3) inter-satellite link.

A feeder-link may be the radio link between a GW and a satellite. As shown in FIG. 2, GW 202 has a first feeder link 221 to SAT1 206 and a second feeder link 222 to SAT2 208. A service link may be a radio link between a satellite and WTRU. For example, as shown in FIG. 2, service link 224 is a radio link between SAT1 206 and WTRU 210. A inter-satellite link (ISL) may be a transport link between satellites. The ISL may be supported only be regenerative payloads and may be a 3GPP radio or proprietary optical interface. For example, as shown in FIG. 2, ISL 226 may link SAT1 206 and SAT2 208.

Depending on the satellite payload configuration, different 3GPP interfaces may be used for each radio link. In a transparent payload, the NR-Uu radio interface is used for both the service link and feeder link. For a regenerative payload, the NR-Uu interface is used on the service link, and a satellite radio interface (SRI) is used for the feeder-link. A detailed UP/CP protocol stack for each payload configuration can be found in 3GPP TR 38.821 Sections 5.1 and 5.2.

An NTN satellite may support multiple cells, where each cell consists of one or more satellite beams. Satellite beams cover a footprint on earth (similar to a terrestrial cell) and can range in diameter from 100-1000 km in LEO deployments, and 200 - 3500 km in GEO deployments. Beam footprints (i.e., the area covered by a beam/cell) in LEO deployments change over time due to satellite movement. Beam footprints in GEO deployments remain fixed relative to the Earth. LEO satellite beam movement may be classified as "Earth moving" where the LEO satellite beam moves continuously across the Earth, or "Earth fixed" where the beam is steered to cover a fixed location until a new beam or cell overtakes the coverage area in a discrete and coordinated change.

Due to the altitude of NTN platforms and beam diameter, the round-trip time (RTT) and maximum differential delay is significantly larger than that of terrestrial systems. In a typical transparent NTN deployment, the RTT can range from 25.77 ms (LEO at 600 km altitude) to 541.46 ms (GEO) and maximum differential delay from 3.12 ms to 10.3 ms. The RTT of a regenerative payload is approximately half that of a transparent payload because a transparent payload configuration consists of both the service and feeder links, whereas the RTT of a regenerative payload considers the service link only. To minimize impact to existing NR systems (e.g., to avoid preamble ambiguity or properly time reception windows), a WTRU may perform a timing pre-compensation procedure prior to initial access.

The pre-compensation procedure requires the WTRU to obtain its position via a GNSS, and the feeder link (or common) delay and satellite position via satellite ephemeris data. The satellite ephemeris data is periodically broadcast in system information, and may include the satellite's speed, direction, and velocity. The WTRU may then estimate the distance (and thus delay) from the satellite, and then add the feeder link delay component to obtain the full WTRU to gNB RTT. The RTT is then used to offset timers, reception windows, and/or timing relations. It is assumed that frequency compensation is performed by the network.

Other key enhancements in NTN concern WTRU mobility and measurement reporting. The difference in the RSRP between the cell center and the cell edge is not as pronounced as in terrestrial systems. This, coupled with the much larger region of cell overlap results in traditional measurement-based mobility to be less reliable in an NTN environment. Accordingly, 3GPP has introduced new conditional handover and measurement reporting triggers that rely on location and time. Enhanced mobility is of special interest in LEO deployments where, due to satellite movement, even a stationary WTRU is expected to perform mobility (e.g., cell change) approximately every 7 seconds (depending on deployment characteristics).

In LEO deployments, as a satellite moves overhead there is a transition point where the satellite has moved sufficiently far from the geographic location of the WTRU that it can no longer provide suitable coverage. For an Earth fixed beam, this loss of coverage may occur simultaneously for all WTRUs within a boundary cell. For Earth moving beams, this loss of coverage happens gradually as the outer boundary of the cell moves along the Earth.

A LEO satellite may complete a full orbit of the earth in approximately 90 to 128 minutes (depending on characteristics such as orbit, altitude, speed, etc.) and will begin to serve the same geographic area again. In NTN, continuous coverage may be defined such that when the footprint of a first satellite can no longer serve a given geographic location, an incoming second satellite, traveling along the same orbital path, can provide service to given geographic location.

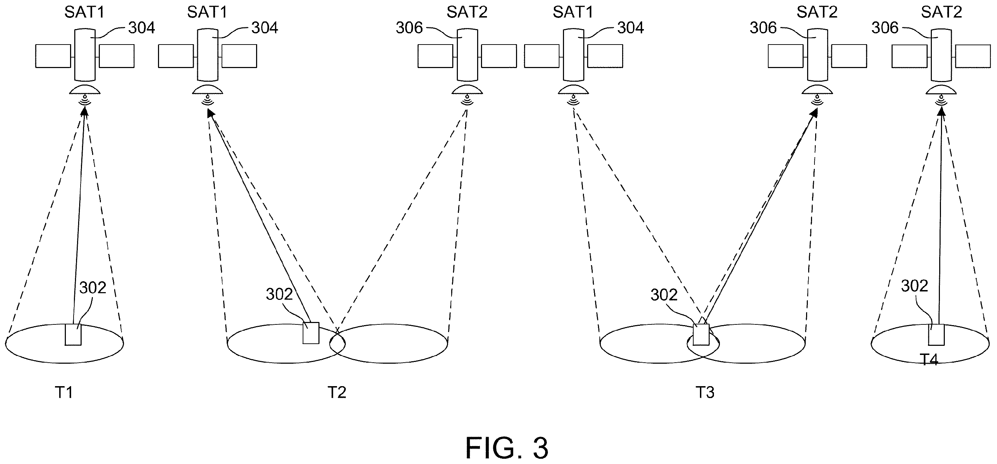

FIG. 3 is an exemplary diagram illustrating a WTRU within an NTN network with continuous coverage. At T1, WTRU 302 is within coverage of SAT1 304. At T2, WTRU 302 is at the edge of SAT1 304 coverage and close to SAT2 306 coverage. At T3, the WTRU 302 transitions to SAT2 306 coverage in a region of overlap between SAT1 304 and SAT2 306. At T4, WTRU 302 is within coverage of SAT2 306.

There are three potential scenarios to address for which system information acquisition and/or update may need to be optimized. These three scenarios are discussed below.

In a first scenario, for NR NTN and IoT NTN, multiple tracking area codes (TACs) may be broadcast by the network for a public land mobile network (PLMN), and WTRU may need to know when the network stops broadcasting a specific TAC.

While a TAC represents a geographical area, a satellite's cell(s) may be moving across multiple TACs and, at some point, the cell may no longer provides coverage within a particular TAC. A WTRU that is not moving may perform reselection when the cell moves beyond the TAC. However, in some circumstances, a WTRU may be mobile. This mobile WTRU may need to be informed if a TAC is removed because if the WTRU is registered with the removed TAC, the WTRU may become unreachable because the network may page the WTRU in the TAC in which it has been registered.

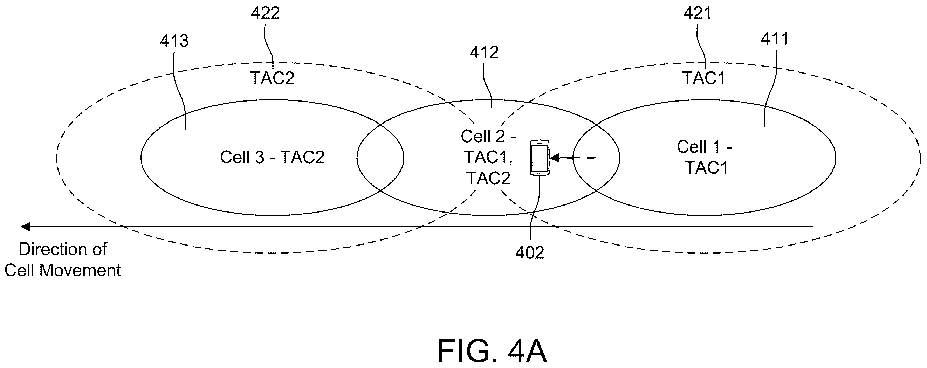

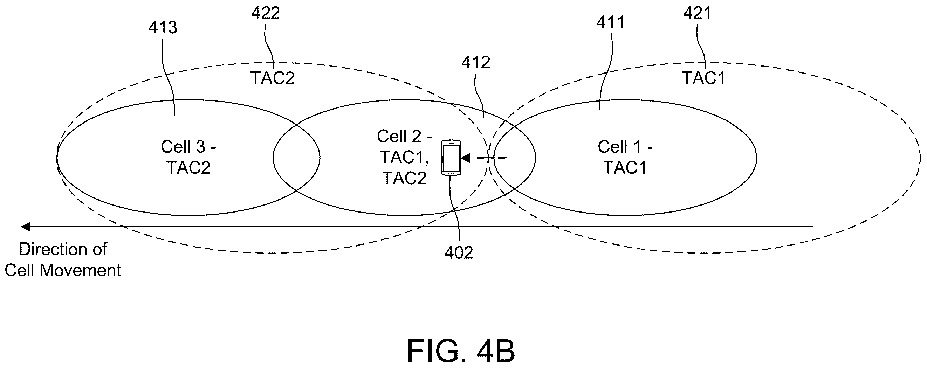

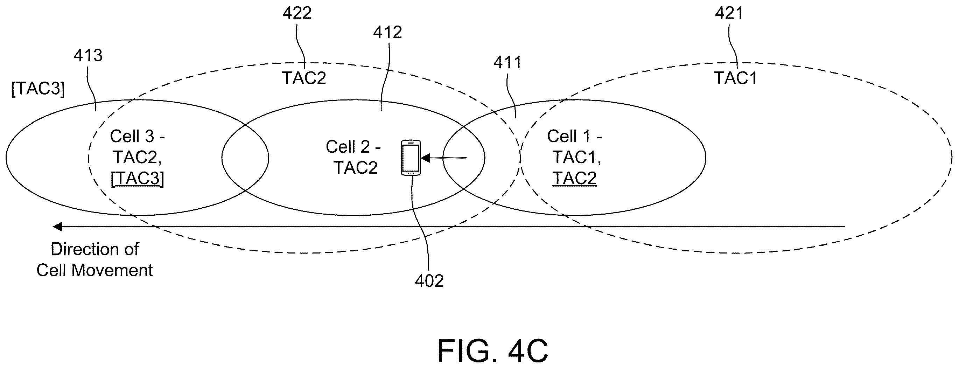

FIGs. 4a to 4b illustrate the above described problem with TAC updates. FIGs. 4 to 6, include a WTRU 402, cell1 411, cell2 412, cell3 413, TAC1 421, and TAC2 422.

FIG. 4a is a diagram illustrating an example of WTRU 402 at T1. As shown in FIG. 4, at T1, WTRU 402 is in cell1 411 and is registered to TAC1 421. WTRU 402 may then reselect to cell2 412 which also broadcasts TAC1 421. Accordingly, no TAU is needed in this situation.

FIG. 4b is a diagram illustrating an example of WTRU 402 at T2. As shown in FIG. 4b, at T2, WTRU 402 in cell2 412 and moves to the physical area of TAC2 422 and cell2 412 is still broadcasting TAC2 422. Accordingly, no TAU is needed in this situation.

FIG. 4c is a diagram illustrating an example of WTRU 402 at T3. As shown in FIG. 4c, at T3, cell2 412 moves out of the TAC1 421 geographical area and removes TAC1 411 from a list. In this situation, WTRU 402 needs to be informed that TAC1 411 has been removed so WTRU 402 can trigger a TAU in order to update the registered tracking area to TAC2 422.

In a situation with an Earth moving cell and a mobile WTRU, it is possible that the WTRU is becomes registered to a TAC that is no longer broadcast by the network. Here, the WTRU may be unreachable because the network will page the WTRU in the TAC that the WTRU is registered with. Therefore, the WTRU needs to be aware when the TAC has been removed from the broadcast list of TACs. In this case, the network may provide a "hard" or "soft" TAC update. The use of a hard or soft TAC update may be dependent on network implementation in Earth fixed cells and Earth moving cells.

In a "hard update," the network may broadcast a single TAC and when the TAC changes, the system information is updated by removing the old TAC and broadcasting a new TAC. A "hard update" may be suitable for a quasi-Earth fixed cell which does not change its geographical coverage on Earth.

In a "soft update," the network broadcasts multiple TACs and adds and removes TACs from the broadcast list as appropriate. A "soft update" may be suitable for the Earth moving cells, whereby the cell moves across the geographical coverage area of multiple tracking areas.

If a system information update mechanism is always used, it may impact all WTRUs in the cell (i.e., WTRUs have to re-read the system information block (SIB) even if the WTRU is not going to access the cell in the near future and if the TAC the WTRU is using remains valid). Requiring WTRUs to continuously read the SIB before access may require WTRUs to read the SIB to obtain ephemeris even if there is no update. Requiring WTRUs to regularly check SIB1 to determine the TAC list has a similar drawback. Both of these approaches require WTRUs to frequently reacquire system information in idle/inactive causing increased power consumption.

In addition, a Narrowband-Internet of Things (NB-IoT) WTRU may not always receive system information updates due to long DRX (longer than the system information modification period). Accordingly, an NB-IoT WTRU may have to continuously check system information (i.e., the SIB containing list of TACs which may be SIB1 or a new NTN specific SIB) in every eDRX cycle. This may not be acceptable because of NB-loT's long battery life requirements.

A validity time period approach allows a WTRU to trigger a SIB1 re-read only when the TAC becomes invalid, which reduces the overall requirement on WTRUs (i.e., WTRUs need to re-read system information to obtain TAC less frequently). However, this may cause all WTRUs in the cell registered with the expired TAC to trigger a TAU at the same time (i.e., when the TAC expires). This can cause RACH congestion/signaling overload, especially in a large IoT deployment (i.e., thousands of IoT devices).

In a second scenario, when a WTRU accesses a cell, it may need up-to-date ephemeris information in order to perform the required pre-compensation on timing for the uplink transmission. This may cause the WTRU to acquire the NTN specific SIB before every access attempt in order to validate that the stored ephemeris information is up-to-date because the network may not notify the WTRUs of ephemeris updates using paging. This may cause unacceptable power consumption, particularly for IoT devices, but also for NR devices. If the WTRU has out of date ephemeris information, RACH failure is likely to occur.

A third scenario may impact RRC_CONNECTED. Options for handling UL synchronization time period expiration may be: (1) WTRU triggers a radio link failure (RLF); (2) WTRU re-acquires SIB and triggers RA; and/or (3) WTRU notifies the network. Options 1 and 2 may involve the WTRU re-reading the system information.

For the case of synchronization time period expiration, the problem is similar to having out of date ephemeris information. If the time period expires, the WTRU may need to trigger a re-read of the system information to obtain the common TA information, and then re-establish its connection with the network. One difference in this case is that the WTRU is in RRC_CONNECTED mode with WTRU specific information as well as the broadcast/common information.

Although the embodiments described below are in the context of non-terrestrial networks, the embodiments may apply to any wireless network and system in which the cells move geographically, such as cells provided by moving network nodes. For example, a moving network node may include non-terrestrial network devices (i.e., satellites), aerial platforms (e.g., satellites, balloons, blimps, drones, etc. ) and/or other moving platforms such as automotive vehicles or trains.

In a scenario where the network broadcasts multiple validity times (e.g., per TAC) and TAC1 expires before TAC2, then any WTRU reading the system information (e.g., upon cell reselection or power on) will generally select the TAC with the longest validity time. If the WTRU is registered on TAC1, but TAC2 has longer validity then the WTRU may trigger a TAU upon cell reselection.

The TAC with the longest validity time period may need to indicate a "next" TAC (i.e., it is not currently valid, but will be the next valid TAC once the validity time period of the current TAC expires). The "next" TAC may include an activation time, which may be before the "current" TAC expiration time. WTRUs may randomize TAU trigger times to select a time that lies between the "next" TAC activation time and "current" TAC expiration time. This spreads the TAU requests over a time window, gradually moving all WTRUs from TAC1 to TAC2 and avoiding congestion in RACH and excessive RAN and CN signaling.

Even in a situation where a single validity time is provided (e.g., for the whole TAC list information) or if a "next" TAC is not provided, all WTRUs may trigger a system information re-read at the same time and a TAU at the same time (when the registered TAC expires). In a similar manner to the embodiment described above, the actual expiration time may be spread over a time window to ensure that the WTRUs will spread the triggering of the re-read of the system information and the TAU from TAC1 to TAC 2 over a time window. The time window may be calculated to start some time before the validity time period of the current TAC expires, such that WTRUs trigger a re-read of the system information after a new TAC becomes available, but before the current TAC expires.

During the randomization of a TAU/RNAU trigger time, the actual expiration time may be calculated based on the WTRU-ID (UE-ID), hash function, or another random value to select a value in the range defined by the validity time period expiration window. This may additionally or alternatively be based on speed or mobility status or state. For example, the TAU trigger time (or TAC1 expiration time) may be scaled according to an estimated WTRU velocity.

The validity time period expiration window/range may be determined by the network based on, for example, how many WTRUs are registered in the TA. The validity time period expiration window/range may be calculated as the difference between the new TAC activation time and the current TAC expiration time period (such that all WTRUs update to the newest TAC while both are valid). The validity time period expiration window/range may be the time from an offset from the TAC expiration time until the actual expiration time. In a WTRU-ID based timeslot, the WTRU may calculate a time window during which it may perform the update, based on, for example the WTRU-ID or another pseudo-random value, and may perform the update at any time during that window.

In one example, the WTRU may select one time window from multiple time windows of equal length within the time range between the current TAC expiration time and the new TAC activation time. In one example, if the time range during which both the current and the new TAC are valid is divided into N time windows of equal length, and each of the time windows of equal length is numbered or indexed from 0 to N-1, the WTRU may select the time window with the index corresponding to the WTRU-ID mod N. In another example, the WTRU may calculate the number of system frame numbers (SFNs) falling within the time range during which both the current and the new TAC are valid and may determine the start and/or the length and/or the end of the time window to correspond to the SFN satisfying a function of WTRU-ID, for example the SFN satisfying the function of WTRU-ID mod N, where N is the number of SFNs within the time range. The validity time period expiration window/range may be calculated such that the latest time that the WTRU could trigger a TAU would occur at a time which would allow the TAU procedure to complete before the TAC becomes invalid and is removed from the broadcast list.

The expiration time may be location based. For example, the network may provide an area (e.g. range of co-ordinates) under which the TAC is valid and the WTRU may trigger a TAU when crossing the TAC "border". The length of the validity time period may be adjusted or the variable portion may be scaled if the WTRU moves by more than a threshold distance (this option may also be applied to ephemeris validity time period).

For the Broadcast TAC timeline, the WTRU may receive, from the network, not only the current TAC list, but also a future TAC list. The future TAC list may include current and next TACs, or it may include a complete timeline of the satellite orbits meaning that the information never becomes invalid until a full system information update is triggered. If the TAC list includes current and next TACs, the WTRU does not need to re-read SIB as long as "current" is valid, but it may need to check MIB-ext in case "next" is valid.

With each TAC list, a switch time may be provided. When a WTRU reaches the switch time, it updates the TAC list in use, and if necessary, triggers the TAU. The expiration time may be randomized according to the above description. The TAC list may contain multiple lists of TAC with a value TAG and/or expiration time. The MIB or MIB-ext may provide a value TAG. The WTRU may apply the TAC list according to value TAG without re-reading full system information.

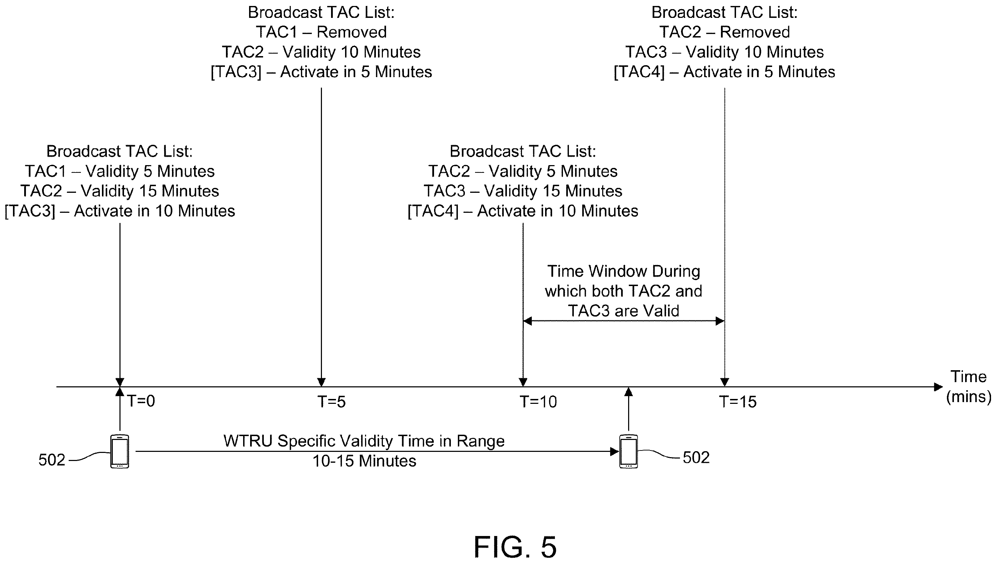

FIG. 5 illustrates a TAC broadcast timeline. At T=0, the network may broadcast a TAC list that includes currently valid TACs (i.e., TAC1 and TAC2) along with a future valid TAC (i.e., TAC3). For each TAC, the broadcast may include a validity time and an activation time. The validity time may provide the time period for which the TAC will be valid while the activation time may provide the time at which that TAC will become valid.

For example, as shown in FIG. 5, at T=0, TAC1 will be valid for 5 more minutes, TAC2 will be valid for 15 more minutes, and TAC3 will activate in 10 minutes. At T=0, the WTRU 502 may select TAC2 because it will remain valid for longest period of time (i.e., 15 minutes). Further, the WTRU 502 may determine that the TAC update window (i.e., updating from TAC2 to TAC3) is between 10 minutes and 15 minutes because TAC2 and TAC3 overlap in that time period. The WTRU may also apply a randomization to determine a WTRU specific time expiration.

At T=5, TAC1 is removed from the broadcast TAC list because it is no longer valid. The broadcast TAC list will include TAC2, which will be valid for the next 10 minutes, and TAC3, which will activate in 5 minutes.

At T=10, the broadcast TAC list includes TAC2 which will be valid for the next 5 minutes and TAC3, which is now valid, and will be valid for the next 15 minutes. Further, at T=10, the broadcast TAC list includes TAC4, which will activate in 10 minutes. The time period between T=10 and T=15 represents the time window in which both TAC2 and TAC3 are valid, and accordingly, is the time window for WTRU 502 to trigger a system information re-read and a TAU update to TAC3. At any point between T=10 and T=15, WTRU 502 will trigger a system information re-read and a TAU update to TAC3. At T=15, TAC2 is removed from the broadcast TAC list because it is no longer valid. The broadcast TAC list will include TAC3, which will be valid for the next 10 minutes and TAC4, which will activate in 5 minutes.

For TAC/ephemeris updates (e.g., before time period expiration or even in case a validity time period is not used), a new bit may be defined in the MIB (NR MIB has one spare bit, but there are multiple spare bits available for LTE/NB-loT NTN). The MIB may be broadcasted most frequently and is the smallest part of broadcast system information. The bit may indicate whether or not the TAC and/or ephemeris information has been updated within a time period preceding the reception of the MIB. The time period may be a validity time of the broadcast information. The time period may be predefined, or may be provided along with the TAC list and/or ephemeris information. The time period may be randomized as described above. Separate bits may be employed for TAC and ephemeris.

Upon reading the MIB, the WTRU may determine whether or not the stored TAC/ephemeris are valid or not based on the value of the bit. If the bit is set to one value (e.g., 0) then the WTRU may determine that TAC/ephemeris has been updated within the validity time period. In this case, even though the validity has not expired, the system information containing relevant information must be re-read in order to obtain updated information.

If the bit is set to another value (e.g., 1) then the WTRU may consider the stored information as valid and avoid re-reading the system information. The WTRU can also reset the validity timer, or begin a new validity time period, and consider the stored information as valid from the point of checking the MIB.

The WTRU may use the MIB instead of reading the MIB, SIB1, SIBx in case of TAC validation, ephemeris validation both in case of idle/inactive and in case of re-establishment in RRC_CONNECTED.

Instead of reading the MIB, SIB1, and SIBx, the WTRU may use only the 1-bit indication in the MIB to determine whether the TAC has been updated. The 1-bit indication may be used for TAC validation and/or ephemeris validation in cases of idle/inactive and/or reestablishment in RRC_CONNECTED. This may occur in every eDRX cycle prior to performing paging monitoring, to ensure the TAC list is up to date. The network may additionally broadcast in the TAC list whether the list of TACs or specific TAC is subject to change. If the WTRU receives the indication that not the TAC list is not subject to chance, WTRU does not need to check the MIB. For ephemeris case, the WTRU may need to perform this check only before triggering access to the network (initial access or re-establishment).

A new, small SIB may be defined that contains a value TAG or indication for changed information. This new SIB may be more suitable for NR, due to there only being only 1 spare bit in the MIB. The MIB spare bit may be used to indicate presence of a MIB extension, or SIB1 extension. The new SIB may contain information about whether specific other information has been updated, similar to what is described above for the spare MIB bits. The WTRU may need to read only MIB and MIB-ext to determine whether there is a change or not.

The network may provide an "equivalent TAC." This "equivalent TAC" avoids the need to perform a TAC update even if the list is changed or if the current TAC becomes invalid due to expiration of the validity time period. Network pages in both the registered TAC and the equivalent TAC. Rather than checking the MIB, the WTRU may indicate the value TAG of the stored information to the network. The network may provide updated information to the WTRU via dedicated signaling. Alternatively, the NW may simply always indicate value TAG to indicate to WTRU which information is now valid (avoids a re-read of the system information, however only updates information when WTRU tries to connect which may not be sufficient for idle mode operation unless equivalent TAC is used).

The WTRU may re-acquire TAC information based on mobility. The problem described applies to a mobile WTRU - a stationary WTRU may not need to perform a system information re-acquisition because a stationary WTRU will trigger a cell reselection in case of earth moving cells, and hence receive the correct TAC list due to acquiring system information after cell reselection. The WTRU may use similar low mobility determination as "relaxed monitoring" i.e. whether RSRP has changed with a specified relative threshold within a specified time period. The WTRU may use positioning, i.e. determine velocity based on GNSS. The WTRU may utilize a threshold distance after which the WTRU is considered to have moved a sufficient amount that the TAC may have changed.

Upon expiration of an ephemeris validity time period, a WTRU may discard all configurations associated with the ephemeris (i.e. CHO configurations, measurement triggering thresholds etc.). The range of possible ephemeris validity times may be in the order of a few seconds, to minutes or hours. A GEO satellite may use longer validity times since the location relative to earth does not change as quickly as a LEO satellite. A WTRU may verify prior to execution of a CHO configuration (i.e. possibly as an additional criteria for CHO execution) that the validity time period has not expired regarding ephemeris time. A WTRU may provide an indication to network (i.e. via assistance information) that validity time is soon to expire, wherein the network may update CHO or measurement configurations or provide new ephemeris information before the old information expires. A WTRU may only trigger location-based measurement reporting if ephemeris validity time period has not expired, or still has a threshold amount of remaining validity time remaining.

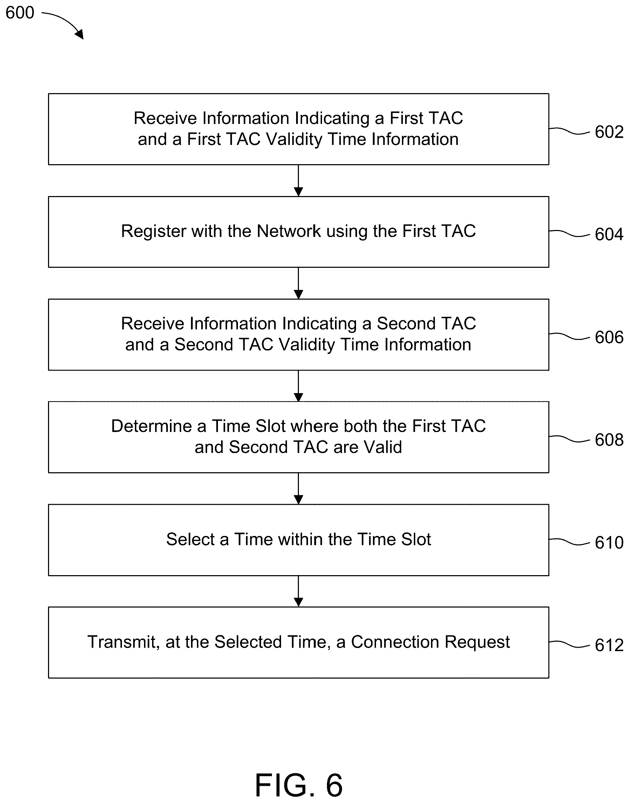

FIG. 6 illustrates an example procedure 600 that a WTRU may perform in an NTN. At 602, the WTRU may receive information that indicates a first tracking area code (TAC) and a first TAC validity time information. At 604, the WTRU may register with the network using the first TAC. At 606, the WTRU may receive information that indicates a second TAC and a second TAC validity time information. At 608, the WTRU may determine, based on the first TAC validity time information and second TAC validity time information, a time period slot wherein both the first TAC and second TAC are valid. At 610, the WTRU may select a time within the time slot. At 612, the WTRU may transmit, at the selected time, a connection request.

The selecting the time within the time period may be randomized. The randomization may be based on a WTRU-ID and/or a hash function. The time period may be scaled. The scaling may be based on a velocity and/or mobile status of the WTRU. The information indicating the first TAC and the first TAC validity time information may be received from a moving network node. The information indicating the second TAC and the second TAC validity time information may be received from a moving network node. The moving network mode may be part of a non-terrestrial network, such as a satellite. An expiration time associated with the first TAC validity time information may be adjusted if the WTRU moves more than a threshold distance.

The above mechanisms may also apply in case of re-establishment (e.g., WTRU checks MIB to determine whether the stored "common" ephemeris information is still valid or not). An RRC re-establishment may be triggered with a new cause value indicating to the network that the cause of RLF is timing information or ephemeris validity expiration. A WTRU specific TA report may be provided with the re-establishment message, enabling NW to immediately provide WTRU specific information to re-synch. The signal information re-read may be triggered ahead of sync time period expiration using an offset from ephemeris time period expiration. In this case, the NW may be notified, since WTRU may need to re-tune to another narrowband (in case of NB-IoT) or another BWP (for NR) in order to obtain the signal information. If NW is notified, NW may either respond with "allowed to read system information" or may provide a dedicated RRC information including new TA information allowing WTRU to avoid reading system information and triggering re-establishment. The RLF may include RLF information to support SON/MDT, and additional information such as location and serving/neighbor cell measurements may be provided. As described, timers can be implemented in different ways such as a clock that counts up or down, a counter, or any other means of measuring a period of time.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a UE, WTRU, terminal, base station, RNC, or any host computer.

### Itemized list of embodiments

1. A method performed by a wireless transmit/receive unit (WTRU), the method comprising:
   receiving information indicating a first tracking area code (TAC) and first TAC validity time information;
   registering with a network using the first TAC;
   receiving information indicating a second TAC and second TAC validity time information;
   determining, based on the first TAC validity time information and the second TAC validity time information, a time period wherein both the first TAC and second TAC are valid;
   selecting a time within the time period; and
   transmitting, at the selected time, a connection request.
2. The method of item 1, wherein the selecting the time within the time period is randomized.
3. The method of item 2, wherein the randomization is based on a WTRU-ID.
4. The method of item 2, wherein the randomization is based on a hash function.
5. The method of item 1, wherein the time period is scaled.
6. The method of item 5, wherein the time period is scaled based on a velocity of the WTRU.
7. The method of item 5, wherein the scaling is based on a mobility status of the WTRU.
8. The method of item 1, wherein the information indicating the first TAC and the first TAC validity time information is received from a moving network node.
9. The method of item 8, wherein the moving network node is part of a non-terrestrial network.
10. The method of item 1, wherein the information indicating the second TAC and the second TAC validity time information is received from a moving network node.
11. The method of item 10, wherein the moving network node is a part of a non-terrestrial network.
12. The method of item 1, wherein an expiration time associated with the first TAC validity time information is adjusted if the WTRU moves more than a threshold distance.
13. A wireless transmit/receive unit (WTRU), comprising:
   a transceiver; and
   a processor;
   wherein the transceiver and processor are configured to:
      receive information indicating a first tracking area code (TAC) and first TAC validity time information;
      register with a network using the first TAC;
      receive information indicating a second TAC and second TAC validity time information;
      determine, based on the first TAC validity time information and the second TAC validity time information, a time period wherein both the first TAC and second TAC are valid;
      select a time within the time period; and
      transmit, at the selected time, a connection request.
14. The WTRU of item 13, wherein the selection of the time within the time period is randomized.
15. The WTRU of item 14, wherein the randomization is based on a WTRU-ID.
16. The WTRU of item 14, wherein the randomization is based on a hash function.
17. The WTRU of item 13, wherein the time period is scaled.
18. The WTRU of item 17, wherein the time period is scaled based on a velocity of the WTRU.
19. The WTRU of item 17, wherein the time period is scaled based on a mobility status of the WTRU.
20. The WTRU of item 13, wherein the information indicating the first TAC and the first TAC validity time information is received from a moving network node.
21. The WTRU of item 20, wherein the moving network node is part of a non-terrestrial network..
22. The WTRU of item 21, wherein the information indicating the second TAC and the second TAC validity time information is received from a moving network node.
23. The WTRU of item 22, wherein the moving network node is part of a non-terrestrial network.
24. The WTRU of item 13, wherein an expiration time associated with the first TAC validity time information is adjusted if the WTRU moves more than a threshold distance.

## Claims

1. A wireless transmit/receive unit (WTRU), comprising:
a transceiver; and
a processor coupled to the transceiver,
wherein the transceiver and the processor are configured to:
receive information indicating a first tracking area code (TAC);
register with a network using the first TAC;
receive information indicating a second TAC;
determine a time period wherein both the first TAC and the second TAC are valid; and
transmit, during the time period, a connection request.

2. The WTRU of claim 1, wherein a time at which the connection request is transmitted is randomized within the time period.

3. The WTRU of claim 1, wherein the connection request comprises a tracking area update (TAU) request or a RAN notification area update (RNAU) request.

4. The WTRU of claim 1, wherein the transceiver and the processor are further configured to:
receive first TAC validity time information associated with the first TAC and second TAC validity time information associated with the second TAC; and
determine the time period based on the first TAC validity time information and the second TAC validity time information.

5. The WTRU of claim 4, wherein determining the time period comprises determining a validity time period expiration window defined between an activation time associated with the second TAC and an expiration time associated with the first TAC.

6. The WTRU of claim 4, wherein the processor is further configured to scale a length of the time period based on a velocity of the WTRU or a mobility status of the WTRU.

7. The WTRU of claim 4, wherein the information indicating the first TAC and the information indicating the second TAC are received from a moving network node.

8. The WTRU of claim 4, wherein an expiration time associated with the first TAC validity time information is adjusted when the WTRU moves more than a threshold distance.

9. A method performed by a wireless transmit/receive unit (WTRU), the method comprising:
receiving information indicating a first tracking area code (TAC);
registering with a network using the first TAC;
receiving information indicating a second TAC;
determining a time period wherein both the first TAC and the second TAC are valid; and
transmitting, during the time period, a connection request.

10. The method of claim 9, further comprising randomizing a time at which the connection request is transmitted within the time period.

11. The method of claim 9, wherein the connection request comprises a tracking area update (TAU) request or a RAN notification area update (RNAU) request.

12. The method of claim 9, further comprising:
receiving first TAC validity time information associated with the first TAC and second TAC validity time information associated with the second TAC; and
determining the time period based on the first TAC validity time information and the second TAC validity time information.

13. The method of claim 12, wherein determining the time period comprises determining a validity time period expiration window defined between an activation time associated with the second TAC and an expiration time associated with the first TAC.

14. The method of claim 12, further comprising scaling a length of the time period based on a velocity of the WTRU or a mobility status of the WTRU.

15. The method of claim 12, wherein the information indicating the first TAC and the information indicating the second TAC are received from a moving network node.
